# EUROPEAN PATENT SPECIFICATION

(11) **EP 4 503 682 B1**
(45) Date of publication and mention of the grant of the patent: **13.05.2026**
(21) Application number: 22940783.8
(22) Date of filing: 26.12.2022
(51) Int. Cl.: H04W 8/02, H04L 69/24

(54) **DATA PROCESSING METHOD AND APPARATUS, COMPUTER READABLE MEDIUM, AND TERMINAL DEVICE**
DATENVERARBEITUNGSVERFAHREN UND -VORRICHTUNG, COMPUTERLESBARES MEDIUM UND ENDGERÄTEVORRICHTUNG
PROCÉDÉ ET APPAREIL DE TRAITEMENT DE DONNÉES, SUPPORT LISIBLE PAR ORDINATEUR ET DISPOSITIF TERMINAL

(30) Priority: 06.05.2022 CN 202210488311
(43) Date of publication of application: 05.02.2025
(73) Proprietor: Tencent Technology (Shenzhen) Company Limited, Shenzhen, Guangdong 518057 (CN)
(72) Inventor: LEI, Yixue, Shenzhen, Guangdong 518057 (CN)
(74) Representative: Novagraaf International SA
(86) International application number: PCT/CN2022/142049
(87) International publication number: WO 2023/213089

(56) References cited:
- WO-A1-2022/021355
- CN-A- 113 746 816
- CN-A- 113 890 852
- CN-A- 114 125 877
- US-A1- 2004 101 125
- ERICSSON: "Discussion on the feasibility of the support and negotiation of a PDU Session specific-security features", 3GPP DRAFT; S3-170779_NSA_DISCUSSION_PDU_SESSION_SPECIFIC_SECURITY_NEGOTIATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Busan, Korea; 20170327 - 20170331, 27 March 2017 (2017-03-27), Mobile Competence Centre ; 650, route des Lucioles ; F-06921 Sophia-Antipolis Cedex ; France , XP051248530

## Description

### RELATED APPLICATION

This application claims priority to Chinese Patent Application No. 202210488311.1, entitled "DATA PROCESSING METHOD AND APPARATUS, COMPUTER-READABLE MEDIUM, AND TERMINAL DEVICE" filed on May 6, 2022.

### FIELD OF THE TECHNOLOGY

The disclosure relates to the field of computer and communication technologies, and, to a data processing method and apparatus, a computer-readable medium, and a terminal device.

### BACKGROUND OF THE DISCLOSURE

In 5th-Generation (5G) and evolved 5G systems, high-bandwidth interactive services are an important type of services, such as cloud gaming, virtual reality (VR), augmented reality (AR), mixed reality (MR), extended reality (XR), and cinematic reality (CR).

These high-bandwidth interactive services not only require high transmission timeliness, but also have a greatly increased volume of data generated at an application layer, with the increase of resolution, frame rate, degree of freedom, and other indicators. The data packet content generated at the application layer of such services may need to be divided into a large quantity of data packet segments with a very low delay for transmission. Therefore, how to control efficient processing of data packets during segmented transmission is a technical problem that needs to be urgently resolved. Document US 2004/101125 A1 (GRAF LESLIE [AU] ET AL) 27 May 2004 (2004-05-27) concerns capability negotiation in telecom systems at a call control level, representing background art.

### SUMMARY

Embodiments of this application provide a data processing method and apparatus, a computer-readable medium, and a terminal device. Processing capability information for a service data packet set can be negotiated to implement processing on the service data packet set, which helps improve efficiency of processing service data packets.

Other features and advantages of this application are apparent through review of the following detailed descriptions or are partially learned through the practice of this application.

According to a first aspect, an embodiment of this application provides a data processing method, performed by a terminal device, as described in claim 1 or 2.

According to another aspect, an embodiment of this application provides a computer-readable medium, having a computer program stored therein, the computer program, when executed by a processor, implementing the data processing method according to the foregoing embodiment.

According to another aspect, an embodiment of this application provides a terminal device, including: one or more processors; and a storage apparatus, configured to store one or more computer programs, the one or more computer programs, when executed by the one or more processors, causing the terminal device to implement the data processing method according to the foregoing embodiment.

In the technical solutions provided in all embodiments of the present disclosure, a terminal device negotiates processing capability information for a service data packet set with a network side device, and then processes, in a communication process with the network side device based on the processing capability information negotiated with the network side device, service data packets included in the service data packet set, so that processing on the service data packet set can be implemented by negotiating the processing capability information for the service data packet set, and then efficiency of processing the service data packets can be improved through the processing on the service data packet set.

The foregoing general descriptions and the following detailed descriptions are merely for illustration and explanation purposes, and are not intended to limit this application.

### BRIEF DESCRIPTION OF THE DRAWINGS

FIG. 1 is a schematic diagram of an exemplary system architecture to which the technical solutions in the embodiments of this application are applicable.
FIG. 2 is a schematic diagram of a transmission process of a multimedia data packet according to an embodiment of this application.
FIG. 3 is a flowchart of a data processing method according to an embodiment of this application.
FIG. 4 is a flowchart of a data processing method according to another embodiment of this application.
FIG. 5 is a flowchart of a data processing method according to still another embodiment of this application.
FIG. 6 is a flowchart of a data processing method according to yet still another embodiment of this application.
FIG. 7 is a block diagram of a data processing apparatus according to an embodiment of this application.
FIG. 8 is a schematic diagram of a structure of a computer system for implementing a terminal device according to an embodiment of this application.

### DESCRIPTION OF EMBODIMENTS

Exemplary implementations are described more thoroughly with reference to the accompanying drawings. However, the exemplary implementations may be implemented in a plurality of forms, and are not to be understood as being limited to the these examples. Conversely, these implementations are provided to make this application more comprehensive and complete, and comprehensively convey the idea of the exemplary implementations to a person skilled in the art.

The term "plurality of" mentioned in this specification means two or more. The term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

With the development of 5G, many multimedia services that require a large data volume and a short delay are applicable, such as cloud gaming, VR, AR, MR, XR, and CR.

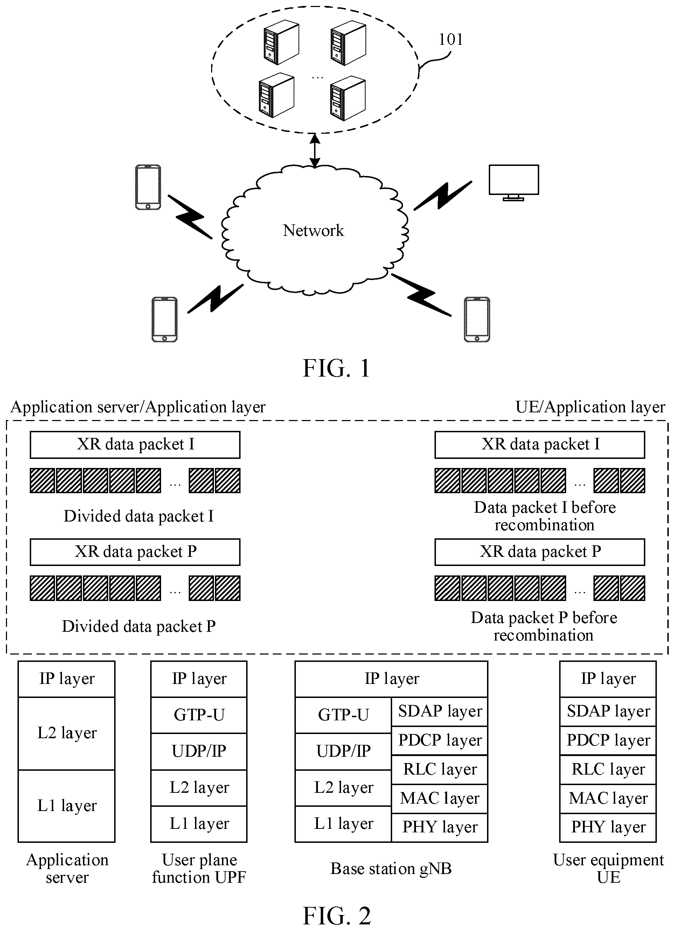

For example, in a cloud gaming scenario shown in FIG. 1, a cloud server 101 is configured to run a cloud game. The cloud server 101 may render a game picture, perform encoding processing on an audio signal and a rendered image, and finally transmit, to game clients through a network, encoded data obtained through the encoding processing. The game client may be user equipment (UE) with a basic streaming media playing capability, a human-computer interaction capability, and a communication capability, such as a smartphone, a tablet computer, a notebook computer, a desktop computer, a smart television, a smart home, an on-board terminal, or an aerial vehicle. The game client may be an application running in a terminal device. The game client may decode the encoded data transmitted by the cloud server 101, to obtain analog audio and video signals, and play the analog audio and video signals.

FIG. 1 shows an exemplary system architecture of a cloud gaming system, and may not limit an architecture of the cloud gaming system. For example, in the embodiments of the present disclosure including the embodiments of both the claims and the specification (hereinafter referred to as "all embodiments of the present disclosure"), the cloud gaming system may further include a back-end server for scheduling, and the like. In addition, the cloud server 101 may be an independent physical server, or may be a server cluster or distributed system including a plurality of physical servers, or may be a cloud server providing basic cloud computing services such as cloud services, cloud databases, cloud computing, cloud functions, cloud storage, network services, cloud communication, middleware services, domain name services, security services, content delivery networks (CDNs), and big data and artificial intelligence platforms. The game client and the cloud server 101 may be directly or indirectly connected through wired or wireless communication. This is not limited in this application.

In the various multimedia-based interactive service application scenarios, a multimedia data packet may be large and therefore may need to be split into a plurality of data packets for transmission. As shown in FIG. 2, in a 5G system, a user plane mainly includes an application server, a user plane object (UPO) (or, "user plane function" (UPF)), a base station (next generation NodeB, gNB for short), and UE. For some service scenarios, transmission of a multimedia data packet may be in a downlink direction, for example, from the application server to the UPF, and then the multimedia data packet is sent to the UE by using the gNB. During transmission, the multimedia data packet (using an XR data packet as an example in FIG. 2) is split at the application layer of the application server. Data packets obtained through splitting are used as internet protocol (IP) packets and are transmitted from the application server to the UPF. The 5G system transmits the sub-data packets to the UE side through a protocol data session for a protocol data unit (PDU) (or "PDU session"). The UE side submits the sub-data packets upward level by level from a protocol stack and recombines the sub-data packets, to recover the multimedia data packet.

In the system shown in FIG. 2, an L1 layer is a physical layer, configured for allowing original data to be transmitted on various physical media; an L2 layer is a data link layer, and the data link layer provides a service for a network layer based on a service provided by the physical layer; an IP layer is the network layer, configured for data transfer between two end systems; UDP stands for user datagram protocol; GTP-U stands for general packet radio service (GPRS) tunneling protocol-user plane; PHY stands for physical; MAC stands for media access control; RLC stands for radio link control; PDCP stands for packet data convergence protocol; and SDAP stands for service data adaptation protocol.

A multimedia service may divide a frame of multimedia data packet into a plurality of data packets for transmission. However, if these data packets are transmitted in a network, the network may not distinguish an association relationship between these data packets, and the association relationship may not be referred to such that a packet may be discarded based on network congestion. If a processing mechanism for service data packets (for example, a service data packet set, which may also be referred to as a PDU set) with associativity is introduced, a terminal device and a network device may need to agree on a capability for processing these service data packets with associativity, and implement the capability through a new signaling procedure. However, such features cannot be implemented based on current technologies.

Based on these problems, the embodiments of this application provides a new data processing solution, to enable the terminal device and the network device to perform negotiation with respect to whether to support processing on the service data packet set (for example, the PDU set) and how to support the processing on the service data packet set, and to provide a signaling processing procedure that supports the foregoing negotiation process, to control efficiency of processing the service data packets is improved by processing the service data packet set.

The implementation details of the technical solutions of the embodiments of this application are described in detail as follows:

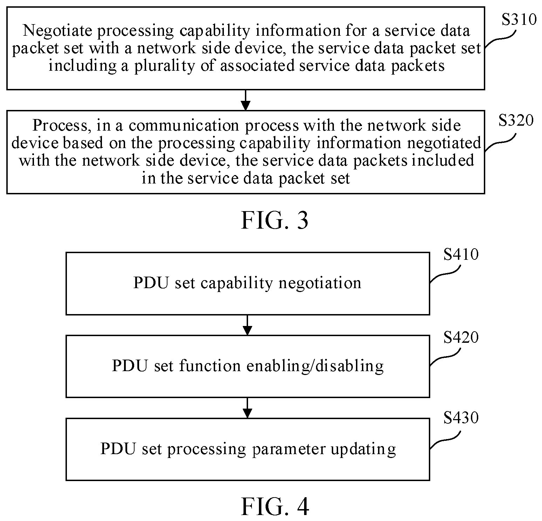

FIG. 3 is a flowchart of a data processing method according to an embodiment of this application. The data processing method may be performed by a terminal device. As shown in FIG. 3, the data processing method may include S310 and S320, which are described in detail as follows:

S310: Negotiate processing capability information for a service data packet set with a network side device, the service data packet set including a plurality of associated service data packets.

S320: Process, in a communication process with the network side device based on the processing capability information negotiated with the network side device, the service data packets included in the service data packet set.

For S310, there may be various embodiments for the terminal device to negotiate the processing capability information for the service data packet set with the network side device. The following describes several exemplary embodiments:

### Embodiment 1 for the terminal device to negotiate the processing capability information with the network side device:

In all embodiments of the present disclosure, the terminal device may generate a registration request, the registration request including processing capability information of the terminal device for the service data packet set, and then send the registration request to the networkside device, to negotiate the processing capability information for the service data packet set with the network side device. In all embodiments of the present disclosure, the network side device may include an access network device, for example, a base station device; and the network side device may further include a core network device, for example, an access and mobility management function (AMF).

In the technical solution of this embodiment, the terminal device negotiates the processing capability information for the service data packet set with the network side device based on the registration request. In all embodiments of the present disclosure, the registration request further indicates to enable a processing function of the service data packet set. Negotiating the processing capability information for the service data packet set and determining whether to enable the processing of the service data packet set may be combined in the registration request. The terminal device negotiates the processing capability information for the service data packet set with the network side device based on the registration request. The registration request is further configured for enabling the processing function of the service data packet set. A signaling interaction for negotiating the processing capability information may not be performed, signaling overheads of the terminal device may be reduced, and information transmission resources between the terminal device and the network side device may be saved.

In the application scenario in which the process of negotiating the processing capability information for the service data packet set and the process of determining whether to enable the processing of the service data packet set are combined in the registration request, if the processing capability information of the terminal device for the service data packet set is to be updated, a new registration request may be generated, the new registration request including updated processing capability information of the terminal device, and the new registration request is sent to the network side device, to update the processing capability information of the terminal device for the service data packet set. The terminal device may generate a new registration request to update the processing capability information for the service data packet set.

### Embodiment 2 for the terminal device to negotiate the processing capability information with the network side device:

In all embodiments of the present disclosure, the terminal device may generate a registration request, the registration request including processing capability information of the terminal device for the service data packet set, and send the registration request to the network side device, to negotiate the processing capability information for the service data packet set with the network side device. The terminal device sends the registration request to the network side device, so that the network side device learns the processing capability information of the terminal device for the service data packet set, for the terminal device to process, based on the negotiated processing capability information adapted to the terminal device, service data packets included in the service data packet set. In addition, the terminal device may generate a PDU session establishment request. The PDU session establishment request includes indication information for enabling or disabling processing of the service data packet set. The PDU session establishment request is sent to the network side device, to indicate to enable or disable the processing of the service data packet set. Negotiating the processing capability information for the service data packet set and determining whether to enable/disable the processing function of the service data packet set may be separately performed, and for example, may be performed respectively in the registration request and the PDU session establishment request. Based on a determination not to perform enabling or disabling of the processing of the service data packet set, the terminal device and the network side device may negotiate the processing capability information for the service data packet set. For example, based on a determination not to process the service data packet set (for example, based on the processing of the service data packet set being disabled), the terminal device and the network side device may pre-negotiate the processing capability information for the service data packet set to obtain a negotiation result (for example, the processing capability information for the service data packet set). Based on a determination to enable the processing of the service data packet set, the terminal device and the network side device may directly process, without spending time on negotiation, the service data packets included in the service data packet set based on the pre-determined negotiation result, saving time for processing the service data packets included in the service data packet set, and improving the efficiency of processing the service data packets.

In the application scenario in which the process of negotiating the processing capability information for the service data packet set and the process of determining whether to enable/disable the processing of the service data packet set are performed respectively in the registration request and the PDU session establishment request, the processing capability information of the terminal device may be updated based on the PDU session establishment request. The PDU session establishment request further includes updated processing capability information of the terminal device, and the updated processing capability information is configured for updating the processing capability information of the terminal device for the service data packet set.

### Embodiment 3 for the terminal device to negotiate the processing capability information with the network side device:

In all embodiments of the present disclosure, the terminal device may generate a PDU session establishment request, the PDU session establishment request including processing capability information of the terminal device for the service data packet set, and then send the PDU session establishment request to the network side device, to negotiate the processing capability information for the service data packet set with the network side device.

In the technical solution of this embodiment, the terminal device negotiates the processing capability information for the service data packet set with the network side device based on the PDU session establishment request. In all embodiments of the present disclosure, the PDU session establishment request further indicates to enable a processing function of the service data packet set. Negotiating the processing capability information for the service data packet set and determining whether to enable the processing function of the service data packet set may be combined in the PDU session establishment request. The terminal device negotiates the processing capability information for the service data packet set with the network side device based on the PDU session establishment request. The PDU session establishment request is further configured for establishing a PDU session and enabling the processing function of the service data packet set, such that separately performing a signaling interaction between the terminal device and the network side device for negotiating the processing capability information and enabling the processing of the service data packet set may not be performed, reducing signaling overheads of the terminal device, and saving information transmission resources between the terminal device and the network side device.

In the application scenario in which the process of negotiating the processing capability information for the service data packet set and the process of determining whether to enable the processing function of the service data packet set are combined in the PDU session establishment request, if the processing capability information of the terminal device for the service data packet set is to be updated, a new PDU session establishment request may be generated, the new PDU session establishment request including updated processing capability information of the terminal device, and the new PDU session establishment request is sent to the network side device, to update the processing capability information of the terminal device for the service data packet set. The terminal device may generate a new PDU session establishment request to update the processing capability information for the service data packet set.

### Embodiment 4 for the terminal device to negotiate the processing capability information with the network side device:

In all embodiments of the present disclosure, the terminal device may generate a PDU session establishment request, the PDU session establishment request including processing capability information of the terminal device for the service data packet set, and send the PDU session establishment request to the network side device, to negotiate the processing capability information for the service data packet set with the network side device. In addition, the terminal device may generate a PDU session modification request. The PDU session modification request includes indication information for enabling or disabling a processing function of the service data packet set. The PDU session modification request is sent to the network side device, to indicate to enable or disable the processing of the service data packet set. Negotiating the processing capability information for the service data packet set and determining whether to enable/disable the processing function of the service data packet set may be separately performed, and for example, may be performed respectively in the PDU session establishment request and the PDU session modification request.

In the application scenario in which the process of negotiating the processing capability information for the service data packet set and the process of determining whether to enable/disable the processing function of the service data packet set are performed respectively in the PDU session establishment request and the PDU session modification request, the processing capability information of the terminal device may be updated based on the PDU session modification request. Specifically, the PDU session modification request further includes updated processing capability information of the terminal device, and the updated processing capability information is configured for updating the processing capability information of the terminal device for the service data packet set. The processing capability information of the terminal device is updated in time based on the PDU session modification request, which avoids processing the service data packets based on obsolete processing capability information of the terminal device, and may control adaptability between a manner of processing the service data packets and current processing capability information of the terminal device, avoiding a negative impact such as an incorrect service data packet loss caused by a change of the processing capability information of the terminal device, and improving stability of processing the service data packets.

### Embodiment 5 for the terminal device to negotiate the processing capability information with the network side device:

In all embodiments of the present disclosure, the terminal device may generate a PDU session establishment request, the PDU session establishment request including processing capability information of the terminal device for the service data packet set, and send the PDU session establishment request to the network side device, to negotiate the processing capability information for the service data packet set with the network side device. In addition, the terminal device may generate a new PDU session establishment request. The new PDU session establishment request includes indication information for enabling or disabling a processing of the service data packet set. The new PDU session establishment request is sent to the network side device, to indicate to enable or disable the processing of the service data packet set. Negotiating the processing capability information for the service data packet set and determining whether to enable/disable the processing of the service data packet set may be separately performed, and for example, may be performed respectively in the PDU session establishment request and the new PDU session establishment request. The process of negotiating the processing capability information for the service data packet set and the process of determining whether to enable/disable the processing of the service data packet set may be separately performed without keeping in synchronization, thereby improving efficiency of processing the service data packet set.

In the application scenario in which the process of negotiating the processing capability information for the service data packet set and the process of determining whether to enable/disable the processing of the service data packet set are performed respectively in the PDU session establishment request and the new PDU session establishment request, the processing capability information of the terminal device may be updated based on the new PDU session establishment request. The new PDU session establishment request further includes updated processing capability information of the terminal device, and the updated processing capability information is configured for updating the processing capability information of the terminal device for the service data packet set.

In all embodiments of the present disclosure, the process for the terminal device and the network side device to negotiate the processing capability information for the service data packet set may be as follows: The processing capability information of the terminal device for the service data packet set is added into a terminal device capability parameter (for example, UE capability), to negotiate the processing capability information for the service data packet set with the network side device. The processing capability information of the terminal device for the service data packet set may be learned by reading the terminal device capability parameter, and a capability parameter of the terminal device may also be learned, thereby improving efficiency of obtaining information of the terminal device capability parameter. In all embodiments of the present disclosure, processing capability information of the terminal device for the service data packet set on a radio access network side may be added into a radio access capability parameter of the terminal device, and processing capability information of the terminal device for the service data packet set on a core network side may be added into a core network capability parameter of the terminal device. The processing capability information of the terminal device for the service data packet set on the radio access network side and the processing capability information of the terminal device for the service data packet set on the core network side are respectively stored in the corresponding capability parameters, thereby improving storage organization and relevance of the processing capability information of the terminal device for the service data packet set, and avoiding information interference caused by storing various information in one place.

In all embodiments of the present disclosure, the indication information for enabling or disabling the processing of the service data packet set includes enabling or disabling at least one of the following: recognizing the service data packets included in the service data packet set; performing processing based on at least one of priorities and quality of service (QoS) of the service data packets included in the service data packet set; performing processing based on at least one of priorities and QoS between service data packet sets; and recovering corresponding multimedia content of the service data packet set based on a packet loss. A plurality of processing functions of the terminal device may be enabled or disabled at the same time, thereby improving efficiency of controlling the functions of the terminal device.

In all embodiments of the present disclosure, recognizing the service data packets included in the service data packet set is recognizing that a service data packet belongs to the service data packets included in the service data packet set; performing processing based on at least one of priorities and QoS of the service data packets included in the service data packet set may be that processing of a service data packet with a high priority or high QoS is controlled, and a service data packet with a low priority or low QoS may be discarded based on network congestion; performing processing based on at least one of priorities and QoS between service data packet sets may be that processing of a service data packet set (PDU set) with a high priority or high QoS is controlled, and a service data packet set with a low priority or low QoS may be discarded based on network congestion; and recovering corresponding multimedia content of the service data packet set based on a packet loss may be that the corresponding multimedia content may be recovered based on a service data packet that is not lost after the packet loss (for example, a service data packet with a low priority or low QoS is lost).

In all embodiments of the present disclosure, the indication information for enabling or disabling the processing of the service data packet set includes enabling or disabling at least one of the following from the network side device: recognizing the service data packets included in the service data packet set; forwarding the service data packets included in the service data packet set and detecting QoS information; and selectively discarding, based on network congestion, based on a ranking difference between the service data packets included in the service data packet set, a service data packet that may not affect data recovery. A plurality of processing features of the network side device may be enabled or disabled at the same time, thereby improving efficiency of controlling the functions of the network side device.

In all embodiments of the present disclosure, recognizing the service data packets included in the service data packet set is recognizing that a service data packet belongs to the service data packets included in the service data packet set; forwarding the service data packets included in the service data packet set and detecting QoS information may be that a delay, jitter, transmission rate, and the like may be detected during transmission of the service data packets; and selectively discarding, based on network congestion, based on a ranking difference between the service data packets included in the service data packet set, a service data packet that may not affect data recovery may be that the corresponding multimedia content may be recovered based on a service data packet that is not lost after the packet loss (for example, a service data packet with a low priority or low QoS is lost).

In all embodiments of the present disclosure, the processing capability information includes a processing capability of the terminal device for the service data packet set, and the processing capability of the terminal device for the service data packet set includes at least one of the following: whether the terminal device is capable of recognizing the service data packets included in the service data packet set; whether the terminal device is capable of performing processing based on at least one of priorities and QoS of the service data packets included in the service data packet set; whether the terminal device is capable of performing processing based on at least one of priorities and QoS between service data packet sets; and whether the terminal device is capable of recovering corresponding multimedia content of the service data packet set based on a packet loss. There may be various processing capabilities of the terminal device for negotiation, thereby improving inclusiveness of the processing capability information, and further expanding an application range of capability information negotiation.

In all embodiments of the present disclosure, the processing capability information includes a processing capability of the network side device for the service data packet set, and the processing capability of the network side device for the service data packet set includes at least one of the following: whether the network side device is capable of recognizing the service data packets included in the service data packet set; whether the network side device is capable of forwarding the service data packets included in the service data packet set and detecting QoS information; and whether the network side device is capable of selectively discarding, based on network congestion, based on a ranking difference between the service data packets included in the service data packet set, a service data packet that may not affect data recovery. There may be various processing capabilities of the network side device for negotiation, thereby improving inclusiveness of the processing capability information, and further expanding an application range of capability information negotiation.

According to the technical solution of the embodiment shown in FIG. 3, the processing capability information for the service data packet set may be negotiated to process the service data packet set, so that efficiency of processing the service data packets may be improved through the processing on the service data packet set.

The following further describes the implementation details of the technical solutions of the embodiments of this application by using specific embodiments:

As shown in FIG. 4, a data processing method according to an embodiment of this application mainly includes the following three procedures:
S410: PDU set capability negotiation process.
S420: PDU set enabling/disabling process.
S430: PDU set processing parameter updating process.

The following describes the three procedures in detail:
In S410, the content of the PDU set capability negotiation process includes, but is not limited to: whether a terminal device has a capability of supporting the PDU set and whether a network side device has a capability of supporting the PDU set.

In all embodiments of the present disclosure, whether the terminal device has the capability of supporting the PDU set includes, but is not limited to: whether the terminal device has a capability of recognizing a series of data packets in the PDU set and performing processing based on priority and QoS characteristics in the PDU set and between PDU sets; and whether the terminal device may recover multimedia content based on a specific decoding algorithm based on a partial packet loss occurring in the PDU set.

In all embodiments of the present disclosure, whether the network side device has the capability of supporting the PDU set includes, but is not limited to: whether the network side device may recognize a series of data packets in the PDU set, perform forwarding, and monitor based on QoS satisfaction including a delay, jitter, rate, and the like; and whether the network side device may selectively discard, based on congestion, based on a ranking difference between the data packets in the PDU set, a data packet that may not affect data decoding.

In all embodiments of the present disclosure, for PDU set capability negotiation, from the perspective of the UE (for example, the terminal device), based on the UE initiating the capability negotiation, the capability information of the PDU set may be used as a part of the UE capability, for interaction between the UE and the core network; and from the perspective of an end-to-end signaling procedure, a new parameter is added into the existing UE capability negotiation procedure to indicate the capability information of the PDU set of the UE.

In S420, the PDU set enabling/disabling process is involved.

In all embodiments of the present disclosure, the PDU set capability negotiation process and the PDU set enabling/disabling process may be separated or may be combined.

If the PDU set capability negotiation process and the PDU set enabling/disabling process are separated, the PDU set capability negotiation process may be performed in combination with a UE registration process or a PDU session establishment process; and the PDU set enabling/disabling process may be together with a PDU session updating process. The PDU set capability negotiation process may be performed in combination with a PDU session establishment process, and the PDU set enabling/disabling process may be performed by establishing a new PDU session.

If the PDU set capability negotiation process and the PDU set enabling/disabling process are combined, the PDU set capability negotiation process may be directly performed in a UE registration process or a PDU session establishment process, and a PDU set processing may be enabled.

In all embodiments of the present disclosure, if the PDU set capability negotiation process and the PDU set enabling/disabling process are separated, the PDU set enabling/disabling process is applicable to both the network side device and the terminal device.

For the network side device, the PDU set enabling/disabling process includes, but is not limited to: enabling/disabling recognizing a series of data packets in the PDU set and performing forwarding; enabling/disabling monitoring based on QoS satisfaction including a delay, jitter, rate, and the like; and enabling/disabling selectively discarding, based on network congestion, based on a ranking difference between the data packets in the PDU set, a data packet that may not affect data decoding.

For the terminal device, the PDU set enabling/disabling process includes, but is not limited to: enabling/disabling a capability of recognizing a series of data packets in the PDU set and performing processing based on priority and QoS characteristics in the PDU set and between PDU sets; and enabling/disabling recovering multimedia content based on a decoding algorithm based on a partial packet loss occurring in the PDU set.

In S430, the PDU set processing parameter updating process may be involved.

In all embodiments of the present disclosure, the PDU set processing parameter updating process includes parameter updating on the network side device and parameter updating on the terminal device side. In all embodiments of the present disclosure, the parameter updating on the terminal device side may be performed based on a UE route selection policy (URSP).

In all embodiments of the present disclosure, the PDU set processing parameter updating process includes, but is not limited to:

updating a parameter related to a PDU set recognition mechanism, including updating a rule for recognizing the PDU set, and the rule may be associated with multimedia encoding and decoding, for example, H.264 or H.265;

updating a QoS monitoring characteristic parameter of the PDU set, including but not limited to monitoring, and reporting content and frequency of bandwidth, delay, jitter, and other parameters; and

updating a processing rule of the data packets based on ranking of the data packets in the PDU set based on network congestion.

In all embodiments of the present disclosure, a UE-side PDU set capability includes a UE radio access capability and a UE core network capability. A related capability parameter of the PDU set on the radio side is stored in the UE radio access capability. A capability parameter of the PDU set on the core network may be stored in a session management (SM) core network capability or in a mobility management (MM) core network capability.

The following describes in detail the technical solution of a specific application scenario of this application with reference to the accompanying drawings:

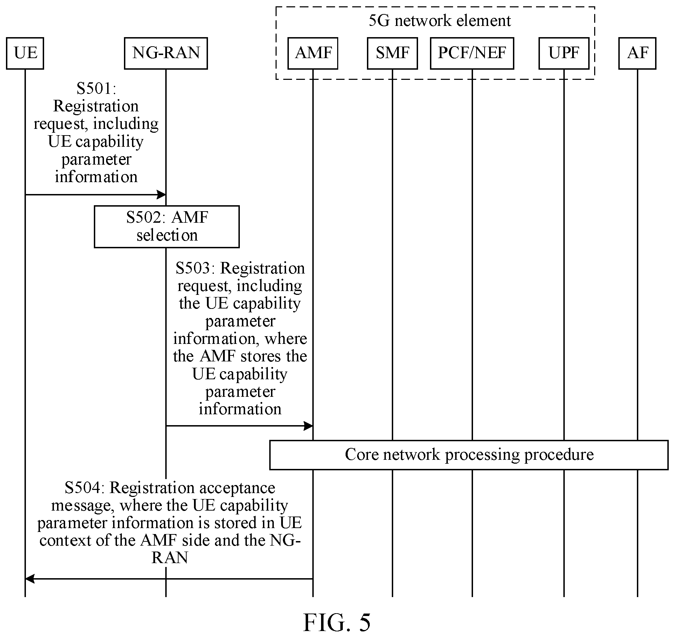

As shown in FIG. 5, a data processing method according to another embodiment of this application includes the following operations:
S501: The UE sends a registration request to the NG-radio access network (NG-RAN), and the registration request includes UE capability parameter information.

The UE capability parameter information includes a capability parameter related to PDU set processing on an air interface side of the UE and a capability parameter related to PDU set processing of a core network.

S502: The NG-RAN performs AMF selection. In addition, the NG-RAN stores, in the NG-RAN, a radio access side capability parameter related to PDU set processing of the UE.

S503: Send the registration request from the NG-RAN to the AMF, where the registration request includes the PDU set capability parameter information of the UE, and the AMF stores the UE capability parameter information.

S504: Based on the core network processing the registration request of the UE and accepting UE registration, the AMF sends a registration acceptance message to the UE, to confirm that the UE is successfully registered. The PDU set capability parameter information of the UE is stored in UE context of the AMF side and the NG-RAN.

In the embodiment shown in FIG. 5, a PDU set capability negotiation process is performed in the registration request of the UE, and the PDU set capability negotiation process is understood as that the UE has enabled a corresponding feature of the PDU set, and PDU set enabling and disabling are not performed. The UE capability parameter is not updated based on the terminal device changing between an inactive state and a connected state. The PDU set capability negotiation process and the UE registration process are combined, a PDU set capability parameter updating process needs to be completed by re-registration.

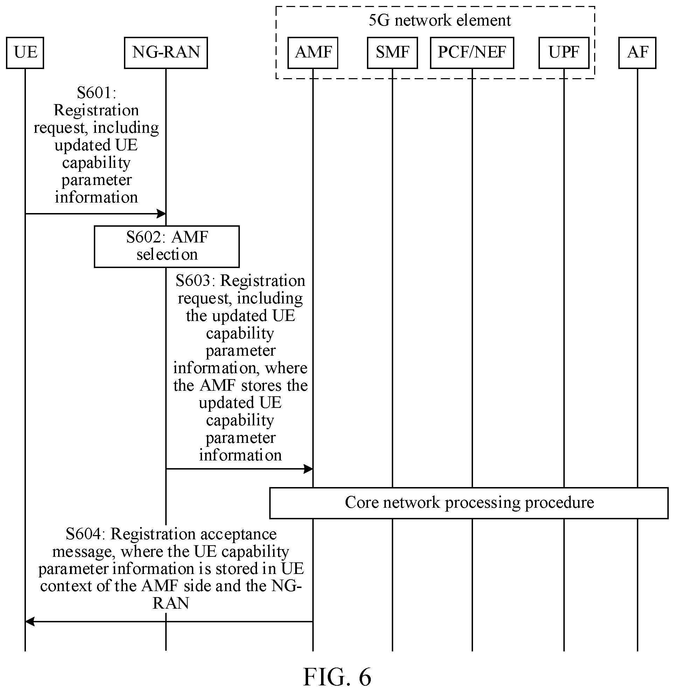

As shown in FIG. 6, a data processing method according to still another embodiment of this application includes the following operations:

S601: The UE sends a registration request to the NG-RAN, and the registration request includes updated UE capability parameter information. The updated UE capability parameter information includes an updated capability parameter related to PDU set processing on an air interface side of the UE and a capability parameter related to PDU set processing of a core network.

S602: The NG-RAN performs AMF selection. In addition, the NG-RAN stores, in the NG-RAN, an updated radio access side capability parameter related to PDU set processing of the UE.

S603: Send the registration request from the NG-RAN to the AMF, where the registration request includes the updated PDU set capability parameter information of the UE, and the AMF stores the updated UE capability parameter information.

S604: Based on the core network processing the registration request of the UE and accepting UE registration, the AMF sends a registration acceptance message to the UE, to confirm that the UE is successfully registered. The updated PDU set capability parameter information of the UE is stored in UE context of the AMF side and the NG-RAN.

In all embodiments of the present disclosure, if the PDU set capability negotiation process and the PDU set enabling/disabling process are separated, the PDU set enabling/disabling process may be performed in a PDU session modification procedure based on a PDU session being established, or may be completed by reestablishing a PDU session process. For example, indication information for enabling the PDU set of the UE may be added into a PDU session establishment message, and then the indication information for enabling the PDU set function of the UE is also added into an N4 session between the SMF and the UPF.

According to the technical solutions of all embodiments of the present disclosure, the terminal device and the network device perform negotiation with respect to whether to support processing on the service data packet set (for example, the PDU set) and how to support the processing on the service data packet set, and provide a signaling processing procedure that supports the foregoing negotiation process, to control efficiency of processing the service data packets is improved by processing the service data packet set.

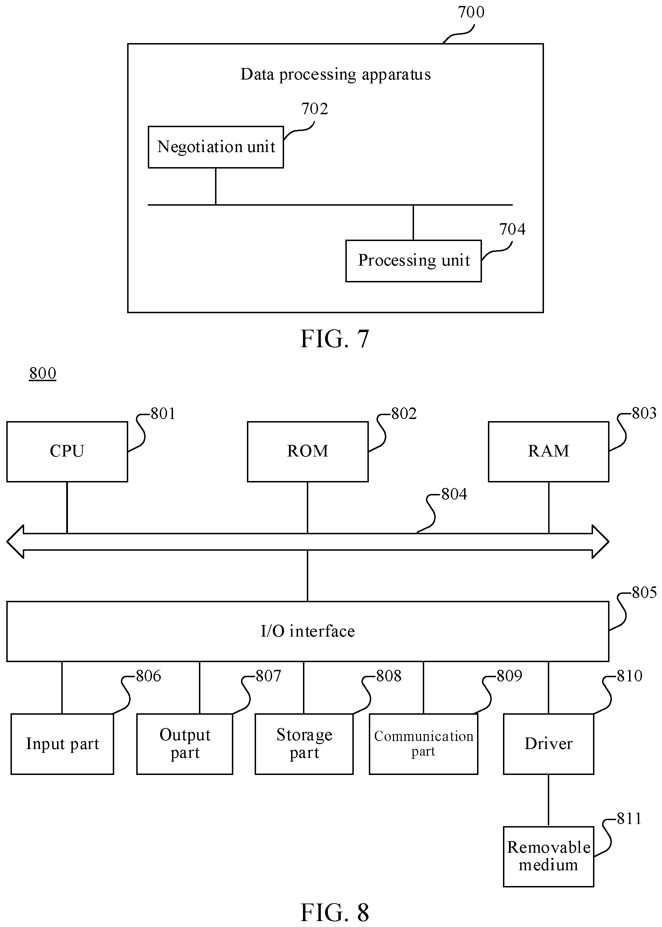

FIG. 7 is a block diagram of a data processing apparatus according to an embodiment of this application. The data processing apparatus may be configured in a terminal device.

As shown in FIG. 7, a data processing apparatus 700 according to an embodiment of this application includes: a negotiation unit 702 and a processing unit 704.

The negotiation unit 702 is configured to negotiate processing capability information for a service data packet set with a network side device, the service data packet set including a plurality of associated service data packets. The processing unit 704 is configured to process, in a communication process with the network side device based on the processing capability information, the service data packets included in the service data packet set.

In all embodiments of the present disclosure, based on the foregoing solution, the negotiation unit 702 is configured to: generate a registration request, the registration request including processing capability information of the terminal device for the service data packet set; and transmit the registration request to the network side device, to negotiate the processing capability information for the service data packet set with the network side device.

In all embodiments of the present disclosure, based on the foregoing solution, the registration request further indicates to enable a processing function of the service data packet set.

In all embodiments of the present disclosure, based on the foregoing solution, the negotiation unit 702 is further configured to: generate a new registration request if the processing capability information of the terminal device for the service data packet set is to be updated, the new registration request including updated processing capability information of the terminal device; and transmit the new registration request to the network side device, to update the processing capability information of the terminal device for the service data packet set.

In all embodiments of the present disclosure, based on the foregoing solution, the data processing apparatus 700 further includes: a generation unit, configured to generate a PDU session establishment request, the PDU session establishment request including indication information for enabling or disabling a processing of the service data packet set; and a transmitting unit, configured to transmit the PDU session establishment request to the network side device, to indicate to enable or disable the processing of the service data packet set.

In all embodiments of the present disclosure, based on the foregoing solution, the PDU session establishment request further includes updated processing capability information of the terminal device, and the updated processing capability information is configured for updating the processing capability information of the terminal device for the service data packet set.

In all embodiments of the present disclosure, based on the foregoing solution, the negotiation unit 702 is configured to: generate a PDU session establishment request, the PDU session establishment request including processing capability information of the terminal device for the service data packet set; and transmit the PDU session establishment request to the network side device, to negotiate the processing capability information for the service data packet set with the network side device.

In all embodiments of the present disclosure, based on the foregoing solution, the PDU session establishment request further indicates to enable processing of the service data packet set.

In all embodiments of the present disclosure, based on the foregoing solution, the negotiation unit 702 is further configured to: generate a new PDU session establishment request if the processing capability information of the terminal device for the service data packet set is to be updated, the new PDU session establishment request including updated processing capability information of the terminal device; and transmit the new PDU session establishment request to the network side device, to update the processing capability information of the terminal device for the service data packet set.

In all embodiments of the present disclosure, based on the foregoing solution, the data processing apparatus 700 further includes: a generation unit, configured to generate a PDU session modification request, the PDU session modification request including indication information for enabling or disabling a processing of the service data packet set; and a transmitting unit, configured to transmit the PDU session modification request to the network side device, to indicate to enable or disable the processing of the service data packet set.

In all embodiments of the present disclosure, based on the foregoing solution, the PDU session modification request further includes updated processing capability information of the terminal device, and the updated processing capability information is configured for updating the processing capability information of the terminal device for the service data packet set.

In all embodiments of the present disclosure, based on the foregoing solution, the data processing apparatus 700 further includes: a generation unit, configured to generate a new PDU session establishment request, the new PDU session establishment request including indication information for enabling or disabling a processing of the service data packet set; and a transmitting unit, configured to transmit the new PDU session establishment request to the network side device, to indicate to enable or disable the processing of the service data packet set.

In all embodiments of the present disclosure, based on the foregoing solution, the new PDU session establishment request further includes updated processing capability information of the terminal device, and the updated processing capability information is configured for updating the processing capability information of the terminal device for the service data packet set.

In all embodiments of the present disclosure, based on the foregoing solution, the negotiation unit 702 is configured to: add processing capability information of the terminal device for the service data packet set into a terminal device capability parameter, to negotiate the processing capability information for the service data packet set with the network side device.

In all embodiments of the present disclosure, based on the foregoing solution, the negotiation unit 702 is configured to: add processing capability information of the terminal device for the service data packet set on a radio access network side into a radio access capability parameter of the terminal device, and add processing capability information of the terminal device for the service data packet set on a core network side into a core network capability parameter of the terminal device.

In all embodiments of the present disclosure, based on the foregoing solution, the indication information for enabling or disabling the processing of the service data packet set includes enabling or disabling at least one of the following processing features of the terminal device: recognizing the service data packets included in the service data packet set; performing processing based on at least one of priorities and QoS of the service data packets included in the service data packet set; performing processing based on at least one of priorities and QoS between service data packet sets; and recovering corresponding multimedia content of the service data packet set based on a packet loss.

In all embodiments of the present disclosure, based on the foregoing solution, the indication information for enabling or disabling the processing of the service data packet set includes enabling or disabling at least one of the following processing features of the network side device: recognizing the service data packets included in the service data packet set; forwarding the service data packets included in the service data packet set and detecting QoS information; and selectively discarding, based on a network congestion, based on a ranking difference between the service data packets included in the service data packet set, a service data packet that may not affect data recovery.

In all embodiments of the present disclosure, based on the foregoing solution, the processing capability information includes a processing capability of the terminal device for the service data packet set, and the processing capability of the terminal device for the service data packet set includes at least one of the following: whether the terminal device is capable of recognizing the service data packets included in the service data packet set; whether the terminal device is capable of performing processing based on at least one of priorities and QoS of the service data packets included in the service data packet set; whether the terminal device is capable of performing processing based on at least one of priorities and QoS between service data packet sets; and whether the terminal device is capable of recovering corresponding multimedia content of the service data packet set based on a packet loss.

In all embodiments of the present disclosure, based on the foregoing solution, the processing capability information includes a processing capability of the network side device for the service data packet set, and the processing capability of the network side device for the service data packet set includes at least one of the following: whether the network side device is capable of recognizing the service data packets included in the service data packet set; whether the network side device is capable of forwarding the service data packets included in the service data packet set and detecting QoS information; and whether the network side device is capable of selectively discarding, based on a network congestion, based on a ranking difference between the service data packets included in the service data packet set, a service data packet that may not affect data recovery.

FIG. 8 is a schematic diagram of a structure of a computer system of a terminal device according to an embodiment of this application.

A computer system 800 of a terminal device shown in FIG. 8 is an example, and shall not constitute any limitation on features and use ranges of the embodiments of this application.

As shown in FIG. 8, the computer system 800 includes a central processing unit (CPU) 801, which may perform various actions and processing based on a program stored in a read-only memory (ROM) 802 or a program loaded from a storage part 808 into a random access memory (RAM) 803, for example, perform the methods in all embodiments of the present disclosure. The RAM 803 further stores various programs and data for system operations. The CPU 801, the ROM 802, and the RAM 803 are connected to each other by a bus 804. An input/output (I/O) interface 805 is also connected to the bus 804.

The following components are connected to the I/O interface 805: an input part 806 including a keyboard, a mouse, or the like; an output part 807 including a cathode ray tube (CRT), a liquid crystal display (LCD), a speaker, or the like; the storage part 808 including a hard disk or the like; and a communication part 809 including a network interface card such as a local area network (LAN) card or a modem. The communication part 809 performs communication processing through a network such as the Internet. A driver 810 is also connected to the I/O interface 805. A removable medium 811, such as a magnetic disk, an optical disc, a magneto-optical disk, or a semiconductor memory, is mounted on the driver 810, so that a computer program read from the removable medium is installed into the storage part 808.

Particularly, according to all embodiments of the present disclosure, the processes described with reference to the flowcharts may be implemented as a computer software program. For example, some embodiments of this application include a computer program product. The computer program product includes a computer program stored in a computer-readable medium. The computer program includes a computer program for performing the method shown in the flowchart. According to all embodiments of the present disclosure, by using the communication part 809, the computer program may be downloaded and installed from a network, and/or installed from the removable medium 811. Based on the computer program being executed by the CPU 801, various features defined in the system of this application are performed.

The computer-readable medium in all embodiments of the present disclosure may be a computer-readable signal medium, a computer-readable storage medium, or any combination thereof. The computer-readable storage medium may be, for example, but is not limited to, an electric, magnetic, optical, electromagnetic, infrared, or semi-conductive system, apparatus, or component, or any combination thereof. The computer-readable storage medium may include, but is not limited to: an electrical connection having one or more wires, a portable computer magnetic disk, a hard disk, a RAM, a ROM, an erasable programmable read-only memory (EPROM), a flash memory, an optical fiber, a portable compact disk read-only memory (CD-ROM), an optical storage device, a magnetic storage device, or any appropriate combination thereof. In this application, the computer-readable storage medium may be any tangible medium including or storing a program, and the program may be used by or used in combination with an instruction execution system, an apparatus, or a device. In this application, the computer-readable signal medium may include a data signal transmitted in a baseband or as part of a carrier, and stores a computer-readable computer program. A data signal transmitted in such a way may be in a plurality of forms, including, but not limited to, an electromagnetic signal, an optical signal, or any appropriate combination thereof. The computer-readable signal medium may be any computer-readable medium other than a computer-readable storage medium. The computer-readable medium may send, propagate, or transmit a program that is used by or used in combination with an instruction execution system, an apparatus, or a device. The computer program included in the computer-readable medium may be transmitted by using a medium, including but not limited to: a wireless medium, a wired medium, or a combination thereof.

The flowcharts and block diagrams in the accompanying drawings illustrate system architectures, features, and operations that may be implemented by systems, methods, and computer program products according to various embodiments of this application. Each block in the flowcharts or block diagrams may represent a module, a program segment, or a part of code. The module, the program segment, or the part of code includes one or more executable instructions for implementing specified logical functions. The functions marked in the blocks may occur in a sequence different from that marked in the accompanying drawings. For example, two consecutive blocks may be executed in parallel, and may be executed in a reverse order, depending on a function involved. Each block in the block diagrams or flowcharts, and a combination of blocks in the block diagrams or flowcharts may be implemented by using a dedicated hardware-based system configured to perform a specified function or operation, or may be implemented by using a combination of dedicated hardware and a computer program.

A unit described in the embodiments of this application may be implemented in a software manner, or may be implemented in a hardware manner, and the described unit may be configured in a processor. Names of the units do not constitute a limitation on the units.

According to some embodiments, this application further provides a computer-readable medium. The computer-readable medium may be included in the terminal device described in some embodiments, or may exist alone and may not configured in the terminal device. The computer-readable medium carries one or more computer programs. Based on the one or more computer programs being executed by the terminal device, the terminal device implements the methods in all embodiments of the present disclosure.

A person skilled in the art may readily understand that the exemplary implementations described herein may be implemented by using software, or may be implemented by combining software and hardware. Therefore, the technical solutions of the implementations of this application may be implemented in a form of a software product. The software product may be stored in a non-volatile storage medium (which may be a CD-ROM, a USB flash drive, a removable hard disk, or the like) or on a network, including several instructions for instructing a computing device (which may be a personal computer, a server, a touch terminal, a network device, or the like) to perform the methods according to the implementations of this application.

The scope of this application is subject only to the appended claims.

## Claims

1. A data processing method, executable by a terminal device, and comprising:
negotiating first processing capability information for a service data packet set with a network side device, the service data packet set comprising a plurality of associated service data packets; and
processing, in a communication process with the network side device based on the first processing capability information, the service data packets comprised in the service data packet set; and
wherein the negotiating processing capability information for a service data packet set with a network side device comprises:
generating a PDU session establishment request, the PDU session establishment request comprising second processing capability information of the terminal device for the service data packet set; and
transmitting the PDU session establishment request to the network side device, to negotiate the first processing capability information for the service data packet set with the network side device; and
generating a new PDU session establishment request, the new PDU session establishment request comprising first information indicating whether to enable or disable processing of the service data packet set; and
transmitting the new PDU session establishment request to the network side device, to indicate whether to enable or disable the processing of the service data packet set; and
wherein the first information indicating whether to enable or disable the processing of the service data packet set comprises enabling or disabling at least one of the following processing functions of the terminal device:
a function of recognizing the service data packets comprised in the service data packet set;
a function of performing processing based on at least one of priorities and quality of service -QoS-of the service data packets comprised in the service data packet set;
a function of performing processing based on at least one of priorities and QoS between service data packet sets; and
a function of recovering corresponding multimedia content of the service data packet set in a packet loss case.

2. A data processing method, executable by a terminal device, and comprising:
negotiating first processing capability information for a service data packet set with a network side device, the service data packet set comprising a plurality of associated service data packets; and
processing, in a communication process with the network side device based on the first processing capability information, the service data packets comprised in the service data packet set; and
wherein the negotiating processing capability information for a service data packet set with a network side device comprises:
generating a PDU session establishment request, the PDU session establishment request comprising second processing capability information of the terminal device for the service data packet set; and
transmitting the PDU session establishment request to the network side device, to negotiate the first processing capability information for the service data packet set with the network side device; and
generating a new PDU session establishment request, the new PDU session establishment request comprising first information indicating whether to enable or disable processing of the service data packet set; and
transmitting the new PDU session establishment request to the network side device, to indicate whether to enable or disable the processing of the service data packet set; and wherein the first information indicating whether to enable or disable the processing of the service data packet set comprises enabling or disabling at least one of the following processing functions of the network side device:
a function of recognizing the service data packets comprised in the service data packet set;
a function of forwarding the service data packets comprised in the service data packet set and detecting QoS information; and
a function of selectively discarding, in a network congestion case, based on an importance difference between the service data packets comprised in the service data packet set, a service data packet that does not affect data recovery.

3. A computer-readable medium, having a computer program stored therein, the computer program, when executed by a processor, implementing the data processing method according to any one of claims 1 to 2.

4. A terminal device, comprising:
one or more processors; and
a memory, configured to store one or more computer programs, the one or more computer programs, when executed by the one or more processors, causing the terminal device to implement the data processing method according to any one of claims 1 to 2.

## Patentansprüche

1. Datenverarbeitungsverfahren, das von einer Endgerätevorrichtung ausführbar ist und Folgendes umfasst:
Aushandeln von ersten Verarbeitungsfähigkeitsinformationen für einen Dienstdatenpaket-Satz mit einer netzwerkseitigen Vorrichtung, wobei der Dienstdatenpaket-Satz eine Vielzahl von zugehörigen Dienstdatenpaketen umfasst; und
Verarbeiten, in einem Kommunikationsprozess mit der netzwerkseitigen Vorrichtung auf der Grundlage der ersten Verarbeitungsfähigkeitsinformationen, der im Dienstdatenpaket-Satz enthaltenen Dienstdatenpakete; und
wobei das Aushandeln von Verarbeitungsfähigkeitsinformationen für einen Dienstdatenpaket-Satz mit einer netzwerkseitigen Vorrichtung Folgendes umfasst:
Erzeugen einer PDU-Sitzungsaufbauanforderung, wobei die PDU-Sitzungsaufbauanforderung zweite Verarbeitungsfähigkeitsinformationen der Endgerätevorrichtung für den Dienstdatenpaket-Satz umfasst; und
Übermitteln der PDU-Sitzungsaufbauanforderung an die netzwerkseitige Vorrichtung, um die ersten Verarbeitungsfähigkeitsinformationen für den Dienstdatenpaket-Satz mit der netzwerkseitigen Vorrichtung auszuhandeln; und
Erzeugen einer neuen PDU-Sitzungsaufbauanforderung, wobei die neue PDU-Sitzungsaufbauanforderung erste Informationen umfasst, die angeben, ob die Verarbeitung des Dienstdatenpaket-Satzes aktiviert oder deaktiviert werden soll; und
Übermitteln der neuen PDU-Sitzungsaufbauanforderung an die netzwerkseitige Vorrichtung, um anzugeben, ob die Verarbeitung des Dienstdatenpaket-Satzes aktiviert oder deaktiviert werden soll; und
wobei die ersten Informationen, die angeben, ob die Verarbeitung des Dienstdatenpaket-Satzes aktiviert oder deaktiviert werden soll, das Aktivieren oder Deaktivieren mindestens einer der folgenden Verarbeitungsfunktionen der Endgerätevorrichtung umfassen:
einer Funktion zum Erkennen der im Dienstdatenpaket-Satz enthaltenen Dienstdatenpakete;
einer Funktion zum Durchführen einer Verarbeitung auf der Grundlage mindestens eines von Prioritäten und Dienstgüte -QoS- der im Dienstdatenpaket-Satz enthaltenen Dienstdatenpakete;
einer Funktion zum Durchführen einer Verarbeitung auf der Grundlage mindestens eines von Prioritäten und QoS zwischen Dienstdatenpaket-Sätzen; und
einer Funktion zum Wiederherstellen eines entsprechenden Multimediainhalts des Dienstdatenpaket-Satzes bei einem Paketverlust.

2. Datenverarbeitungsverfahren, das von einer Endgerätevorrichtung ausführbar ist und Folgendes umfasst:
Aushandeln von ersten Verarbeitungsfähigkeitsinformationen für einen Dienstdatenpaket-Satz mit einer netzwerkseitigen Vorrichtung, wobei der Dienstdatenpaket-Satz eine Vielzahl von zugehörigen Dienstdatenpaketen umfasst; und
Verarbeiten, in einem Kommunikationsprozess mit der netzwerkseitigen Vorrichtung auf der Grundlage der ersten Verarbeitungsfähigkeitsinformationen, der im Dienstdatenpaket-Satz enthaltenen Dienstdatenpakete; und
wobei das Aushandeln von Verarbeitungsfähigkeitsinformationen für einen Dienstdatenpaket-Satz mit einer netzwerkseitigen Vorrichtung Folgendes umfasst:
Erzeugen einer PDU-Sitzungsaufbauanforderung, wobei die PDU-Sitzungsaufbauanforderung zweite Verarbeitungsfähigkeitsinformationen der Endgerätevorrichtung für den Dienstdatenpaket-Satz umfasst; und
Übermitteln der PDU-Sitzungsaufbauanforderung an die netzwerkseitige Vorrichtung, um die ersten Verarbeitungsfähigkeitsinformationen für den Dienstdatenpaket-Satz mit der netzwerkseitigen Vorrichtung auszuhandeln; und
Erzeugen einer neuen PDU-Sitzungsaufbauanforderung, wobei die neue PDU-Sitzungsaufbauanforderung erste Informationen umfasst, die angeben, ob die Verarbeitung des Dienstdatenpaket-Satzes aktiviert oder deaktiviert werden soll; und
Übermitteln der neuen PDU-Sitzungsaufbauanforderung an die netzwerkseitige Vorrichtung, um anzugeben, ob die Verarbeitung des Dienstdatenpaket-Satzes aktiviert oder deaktiviert werden soll; und
wobei die ersten Informationen, die angeben, ob die Verarbeitung des Dienstdatenpaket-Satzes aktiviert oder deaktiviert werden soll, das Aktivieren oder Deaktivieren mindestens einer der folgenden Verarbeitungsfunktionen der netzwerkseitigen Vorrichtung umfassen:
einer Funktion zum Erkennen der im Dienstdatenpaket-Satz enthaltenen Dienstdatenpakete;
einer Funktion zum Weiterleiten der im Dienstdatenpaket-Satz enthaltenen Dienstdatenpakete und zum Erkennen von QoS-Informationen; und
einer Funktion zum selektiven Verwerfen, bei einer Netzwerküberlastung, auf der Grundlage eines Wichtigkeitsunterschieds zwischen den im Dienstdatenpaket-Satz enthaltenen Dienstdatenpaketen, eines Dienstdatenpakets, das die Datenwiederherstellung nicht beeinträchtigt.

3. Computerlesbares Medium, das ein darin gespeichertes Computerprogramm aufweist, wobei das Computerprogramm, wenn es von einem Prozessor ausgeführt wird, das Datenverarbeitungsverfahren nach einem der Ansprüche 1 bis 2 implementiert.

4. Endgerätevorrichtung, umfassend:
einen oder mehrere Prozessoren; und
einen Speicher, der konfiguriert ist, ein oder mehrere Computerprogramme zu speichern, wobei die ein oder mehreren Computerprogramme, wenn sie von dem einen oder den mehreren Prozessoren ausgeführt werden, die Endgerätevorrichtung veranlassen, das Datenverarbeitungsverfahren nach einem der Ansprüche 1 bis 2 zu implementieren.

## Revendications

1. Procédé de traitement de données, exécutable par un dispositif terminal, et comprenant :
la négociation de premières informations de capacité de traitement pour un ensemble de paquets de données de service avec un dispositif côté réseau, l'ensemble de paquets de données de service comprenant une pluralité de paquets de données de service associés ; et
le traitement, dans un processus de communication avec le dispositif côté réseau sur la base des premières informations de capacité de traitement, des paquets de données de service compris dans l'ensemble de paquets de données de service ; et
dans lequel la négociation d'informations de capacité de traitement pour un ensemble de paquets de données de service avec un dispositif côté réseau comprend :
la génération d'une requête d'établissement de session PDU, la requête d'établissement de session PDU comprenant des deuxièmes informations de capacité de traitement du dispositif terminal pour l'ensemble de paquets de données de service ; et
la transmission de la requête d'établissement de session PDU au dispositif côté réseau, pour négocier les premières informations de capacité de traitement pour l'ensemble de paquets de données de service avec le dispositif côté réseau ; et
la génération d'une nouvelle requête d'établissement de session PDU, la nouvelle requête d'établissement de session PDU comprenant des premières informations indiquant s'il faut activer ou désactiver le traitement de l'ensemble de paquets de données de service ; et
la transmission de la nouvelle requête d'établissement de session PDU au dispositif côté réseau, pour indiquer s'il faut activer ou désactiver le traitement de l'ensemble de paquets de données de service ; et
dans lequel les premières informations indiquant s'il faut activer ou désactiver le traitement de l'ensemble de paquets de données de service comprennent l'activation ou la désactivation d'au moins l'une des fonctions de traitement suivantes du dispositif terminal :
une fonction de reconnaissance des paquets de données de service compris dans l'ensemble de paquets de données de service ;
une fonction d'exécution d'un traitement basé sur au moins l'un parmi des priorités et une qualité de service -QoS- des paquets de données de service compris dans l'ensemble de paquets de données de service ;
une fonction d'exécution d'un traitement basé sur au moins l'un parmi des priorités et une QoS entre des ensembles de paquets de données de service ; et
une fonction de récupération d'un contenu multimédia correspondant de l'ensemble de paquets de données de service en cas de perte de paquet.

2. Procédé de traitement de données, exécutable par un dispositif terminal, et comprenant :
la négociation de premières informations de capacité de traitement pour un ensemble de paquets de données de service avec un dispositif côté réseau, l'ensemble de paquets de données de service comprenant une pluralité de paquets de données de service associés ; et
le traitement, dans un processus de communication avec le dispositif côté réseau sur la base des premières informations de capacité de traitement, des paquets de données de service compris dans l'ensemble de paquets de données de service ; et
dans lequel la négociation d'informations de capacité de traitement pour un ensemble de paquets de données de service avec un dispositif côté réseau comprend :
la génération d'une requête d'établissement de session PDU, la requête d'établissement de session PDU comprenant des deuxièmes informations de capacité de traitement du dispositif terminal pour l'ensemble de paquets de données de service ; et
la transmission de la requête d'établissement de session PDU au dispositif côté réseau, pour négocier les premières informations de capacité de traitement pour l'ensemble de paquets de données de service avec le dispositif côté réseau ; et
la génération d'une nouvelle requête d'établissement de session PDU, la nouvelle requête d'établissement de session PDU comprenant des premières informations indiquant s'il faut activer ou désactiver le traitement de l'ensemble de paquets de données de service ; et
la transmission de la nouvelle requête d'établissement de session PDU au dispositif côté réseau, pour indiquer s'il faut activer ou désactiver le traitement de l'ensemble de paquets de données de service ; et
dans lequel les premières informations indiquant s'il faut activer ou désactiver le traitement de l'ensemble de paquets de données de service comprennent l'activation ou la désactivation d'au moins l'une des fonctions de traitement suivantes du dispositif côté réseau :
une fonction de reconnaissance des paquets de données de service compris dans l'ensemble de paquets de données de service ;
une fonction de transfert des paquets de données de service compris dans l'ensemble de paquets de données de service et de détection d'informations de QoS ; et
une fonction de rejet sélectif, en cas de congestion du réseau, sur la base d'une différence d'importance entre les paquets de données de service compris dans l'ensemble de paquets de données de service, d'un paquet de données de service qui n'affecte pas la récupération de données.

3. Support lisible par ordinateur, ayant un programme d'ordinateur stocké dans celui-ci, le programme d'ordinateur, lorsqu'il est exécuté par un processeur, mettant en œuvre le procédé de traitement de données selon l'une quelconque des revendications 1 à 2.

4. Dispositif terminal, comprenant :
un ou plusieurs processeurs ; et
une mémoire, configurée pour stocker un ou plusieurs programmes d'ordinateur, les un ou plusieurs programmes d'ordinateur, lorsqu'ils sont exécutés par les un ou plusieurs processeurs, amenant le dispositif terminal à mettre en œuvre le procédé de traitement de données selon l'une quelconque des revendications 1 à 2.
